# EUROPÄISCHE PATENTSCHRIFT

(11) **EP 1 127 311 B1**
(45) Veröffentlichungstag und Bekanntmachung des Hinweises auf die Patenterteilung: **02.01.2004**
(21) Anmeldenummer: 99970480.2
(22) Anmeldetag: 01.10.1999
(51) Int. Cl.: G06F 9/00

(54) **VERFAHREN ZUR ABSICHERUNG VON EINSPRUNGSADRESSEN**
METHOD FOR PROTECTING ENTRY ADDRESSES
PROCEDE DE PROTECTION D'ADRESSES D'ENTREE

(30) Priorität: 09.10.1998 DE 19846676
(43) Veröffentlichungstag der Anmeldung: 29.08.2001
(73) Patentinhaber: Infineon Technologies AG, 81669 München (DE)
(72) Erfinder: MAY, Christian, D-81677 München (DE); FREIWALD, Jürgen, D-85635 Höhenkirchen (DE); BRIXEL, Olaf, D-80997 München (DE)
(74) Vertreter: Epping Hermann & Fischer
(86) Internationale Anmeldenummer: PCT/DE1999/003169
(87) Internationale Veröffentlichungsnummer: WO 2000/022506

(56) Entgegenhaltungen:
- EP-A- 0 859 319
- DE-A- 19 709 975
- US-A- 5 515 519

## Beschreibung

Auf zukünftigen Chipkarten sollen Applikationen von Drittfirmen zugelassen werden, die Funktionen des Betriebssystems aufrufen können. Dabei könnte die Gefahr bestehen, daß diese Applikationen von Drittfirmen Manipulations- oder Sabotageversuche hinsichtlich anderer Programmteile enthalten. Ein solcherart möglicher Angriff wäre, nicht einen gültigen Funktionszeiger einer Betriebssystemroutine aus der Applikation heraus zu verwenden, sondern eine andere Einsprungsadresse zu verwenden. Dadurch würde Code des Betriebssystems nicht ordnungsgemäß ausgeführt und z.B. möglicherweise Datenverluste durch fehlerhaftes Überschreiben eines Speicherbereiches provoziert werden.

Gemäß dem Stand der Technik ist eine Lösung durch den Einsprung auf vordefinierte Adressen in festen Abständen (gates) geplant. Dabei muß zunächst überprüft werden, ob eine Gateadresse im Bereich der für das Modul erlaubten Adressen liegt. Bei positivem Resultat wird das gate angesprungen und von dort weiter ein Sprung in die eigentliche Funktion ausgeführt. Dies ist nachteilig, da dabei ein berechneter Sprung ausgeführt werden muß, der zu einem Peephole in der CPU Pipeline führt. Alternativ kann der Sprung in die Funktion verzögert nach einigen vorgezogenen Programminstruktionen der Funktion stattfinden. Dies führt zu einem schwierigen Optimierungsproblem für den Compiler, falls am Anfang der Funktion eine Schleife eingeleitet wird und ständig zwischen dem Code am gate und dem ausgelagerten Code hin und her gesprungen werden muß.

In der EP 0 859 319 A1 ist eine Kontrollschaltung für die Zugangsberechtigung zu Speicherplätzen beschrieben, zu der Adresstabellen in dem Speicher enthalten sind, die erstens die Adressen von Programmbefehlen enthalten, zweitens die Adressen eines zu schützenden Speicherbereichs und drittens die Adressen derjenigen Programmbefehle, die auf den geschützten Speicherbereich zugreifen dürfen. Die Schaltung umfasst Mittel zum Vergleich einer aktuellen Adresse eines Programmbefehls mit den Adressen des geschützten Bereiches. Falls eine Übereinstimmung vorhanden ist, wird die Adresse des Speicherplatzes aus dem der Programmbefehl ausgelesen wurde, mit der Tabelle der Adressen derjenigen Programmbefehle verglichen, die auf den geschützten Speicherbereich zugreifen dürfen. Auf diese Weise kann ein unzulässiger Zugriff auf den geschützten Bereich detektiert und unterbunden werden.

Es ist die Aufgabe der Erfindung, ein Verfahren zur Absicherung von Einsprungsadressen zu schaffen, bei dem kein berechneter Sprung ausgeführt werden muß und damit kein Peephole in der Pipeline der CPU-Instruktionen auftritt.

Erfindungsgemäß wird diese Aufgabe dadurch gelöst, daß zulässige Einsprungsadressen direkt angesprungen werden dürfen, und durch eine Korrelation von Daten, die nicht innerhalb der selben, einzelnen Instruktion stehen können, erkennbar sind.

Dabei kann der Compiler oder Linker durch Organisation des Programmcodes sicherstellen, daß nur legale Einsprungsadressen diese Korrelation erfüllen. Beispielsweise kann die Korrelation dadurch erfolgen, daß die Speicherzelle unmittelbar vor oder nach der Einsprungsadresse die Adresse korrelierter Daten enthält.

Eine bevorzugte Möglichkeit ist dabei, daß die Speicherzelle unmittelbar vor oder nach der Einsprungsadresse einen Verweis auf den entsprechenden Eintrag in einer geschützten Liste legaler Einsprungsadressen enthält.

Es ist dabei besonders bevorzugt, beim Ausführen des Funktionsaufrufs automatisch zu überprüfen, ob die Korrelation der Daten erfüllt ist.

Besonders bevorzugt ist es, beim Ausführen des Funktionsaufrufs zusätzlich automatisch zu überprüfen, ob das korrelierte Datum im vorgesehenen, reservierten Speicherbereich liegt.

Sofern Programminstruktionen eine gewisse maximale Anzahl n von Bytes nicht überschreiten, kann eine weitere erfindungsgemäße Lösung angewendet werden, indem ein spezieller no-operation Code vorgesehen wird, der zur Vermeidung zufälliger Korrelationen dient, und vom Compiler oder Linker nachträglich eingefügt werden kann.

Dabei ist es besonders bevorzugt, daß die Korrelation zwischen Codedaten erfolgt, die mindestens n Bytes voneinander entfernt sind.

Außerdem kann die Einsprungsadresse erfindungsgemäß durch das Einfügen einer speziellen Bytesequenz abgesichert werden, die nicht innerhalb des regulären Codes auftreten kann, beispielsweise durch einen speziellen no-operation Code.

Erfindungsgemäß kann also das Peephole in der Pipeline durch einen direkten Ansprung an die Adresse des Funktionspointers vermieden werden. Allerdings muß dann dafür gesorgt werden, daß legale Ansprungsadressen durch nichtlokale Codekorrelationen ausgezeichnet sind. Der Compiler oder Linker muß durch Organisation des Programmcodes sicherstellen, daß nur legale Funktionsansprungadressen diese Korrelation erfüllen. "Nichtlokale Korrelation" bedeutet hierbei eine Korrelation von Daten, die nicht innerhalb der selben, einzelnen Instruktion stehen können.

Folgende bevorzugte Ausführungsformen der Erfindung sind also beispielsweise möglich:
1. Korrelation mit Daten in dafür reservierten Speicherbereichen: Eine einfache Implementation könnte z.B. in der Speicherzelle unmittelbar vor der Einsprungsadresse die Adresse eines korrelierten Datums beinhalten, das z.B. wieder der legalen Einsprungsadresse der Funktion entspricht. Beim Ausführen des Funktionsaufrufs kann automatisch überprüft werden, ob diese Korrelation erfüllt ist und/oder ob das korrelierte Datum im vorgesehenen, reservierten Speicherbereich liegt. Der Mechanismus ist auf den ersten Blick sehr ähnlich zum bisherigen Gatemechanismus, hat aber den Vorteil, daß kein berechneter Sprung auftritt und die Instruktionen der Funktion unmittelbar in den Prefetcher der Pipeline geholt werden können. Ein Peephole tritt nur im Fehlerfall eines illegalen Einsprungs auf.
2. Korrelation mit Programmdaten in nicht reservierten Speicherbereichen. Diese Lösung setzt voraus, daß die Programminstruktionen eine gewisse maximale Anzahl n von Bytes nicht überschreiten. Längere Datenbereiche im Codesegment müssen dann ausgeschlossen werden. Außerdem setzt diese Methode einen speziellen no-operation Code (SNOP) voraus, der niemals im regulären Code eingesetzt wird und nur zum Vermeiden von zufälligen Korrelationen vom Compiler/Linker nachträglich eingefügt wird. Zwei unterschiedliche Typen von Lösungen lassen sich hier noch unterscheiden:
   a) Die Korrelation erfolgt zwischen Codedaten, die mindestens n Bytes voneinander entfernt sind. Der Compiler bzw. Linker muß dabei sicherstellen, daß etwaige zufällige Korrelationen im Code durch Einführen von SNOP-Zwischencodes vermieden werden.
      Eine mögliche Implementation sieht folgendermaßen aus: Unmittelbar vor der Einsprungsadresse der Funktion steht ein Wert, der eine Funktion der darauf folgenden n+m (m≥ 0, ansonsten beliebig) Bytes ist. Sollte diese Korrelation irgendwo im Code zufällig erfüllt sein, so muß der Compiler bzw. Linker diese zufällige Korrelation aufheben: Da in der Folge der n+m Bytes nach Voraussetzung mindestens eine echte Instruktion endet, kann nach deren Ende eine Reihe von SNOP-Instruktionen eingefügt werden, bis sich der Funktionswert ändert. Die Funktion kann dabei innerhalb gewisser Grenzen frei gewählt werden.
   b) Die Einsprungsadresse wird abgesichert durch das Einfügen einer speziellen Bytesequenz, die nicht innerhalb des regulären Codes auftreten kann. Beispiel hierfür ist eine Folge von Op-Codes (SNOP).

Erfindungsgemäß werden also die Einsprungsadressen für Funktionen durch nichtlokale Codekorrelationen, die nur an den Einsprungsadressen auftreten können, abgesichert.

Vorteilhafterweise wird so der Gate Mechanismus, der einen berechneten Jump nach sich zieht und ein Peephole in der Instruktions Pipeline verursacht, vermieden.

Es wird vielmehr direkt an die Einsprungsadresse in die Funktion gesprungen. Die nachfolgenden Instruktionen können in die Pipeline geladen werden, unabhängig davon, ob die Verifikation der Sprungadresse positiv oder negativ ausfällt. Die Effizienz von überwachten Funktionsaufrufen wird damit erhöht.

## Patentansprüche

1. Verfahren zur Absicherung von Einsprungsadressen für Funktionen in Computer programmen, bei dem eine zulässige Einsprungsadresse durch eine Korrelation von Daten, die nicht innerhalb derselben einzelnen Instruktion stehen, erkennbar gemacht wird und in einer Speicherzelle unmittelbar vor oder nach der Einsprungsadresse eine Adresse eines korrelierten Datums abgelegt wird.

2. Verfahren nach Anspruch 1, bei dem
in der Speicherzelle unmittelbar vor oder nach der Einsprungsadresse ein Verweis auf einen Eintrag in einer geschützten Liste legaler Einsprungsadressen abgelegt wird.

3. Verfahren nach Anspruch 1 oder 2, bei dem
die Einsprungsadresse direkt angesprungen wird.

4. Verfahren nach einem der Ansprüche 1 bis 3, bei dem
bei einem Ausführen eines Funktionsaufrufs automatisch überprüft wird, ob für die betreffende Einsprungsadresse die Korrelation der Daten erfüllt ist.

5. Verfahren zur Absicherung von Einsprungsadressen für Funktionen in Computerprogrammen, bei dem eine zulässige Einsprungsadresse durch eine Korrelation von Daten, die nicht innerhalb derselben einzelnen Instruktion stehen, erkennbar gemacht wird und diese Korrelation mit Programmdaten in nicht reservierten Speicherbereichen geschieht, wobei
Programminstruktionen eine gewisse maximale Anzahl n von Bytes nicht überschreiten und zur Vermeidung zufälliger Korrelationen ein spezieller No-Operation-Code (SNOP) vorgesehen wird und
die Korrelation zwischen Codedaten erfolgt, die mindestens n Bytes voneinander entfernt sind.

6. Verfahren nach Anspruch 5, bei dem
die Einsprungsadresse durch das Einfügen einer speziellen Bytesequenz abgesichert wird, die nicht innerhalb des regulären Codes auftreten kann.

7. Verfahren nach Anspruch 6, bei dem
als spezielle Bytesequenz ein spezieller No-Operation-Code (SNOP) verwendet wird.

8. Verfahren nach einem der Ansprüche 5 bis 7, bei dem
die Einsprungsadresse direkt angesprungen wird.

## Claims

1. Method for protection of vector addresses for functions in computer programs, in which a permissible vector address is made identifiable by correlation of data which are not within the same individual instruction, and an address of a correlated data item is stored immediately before or after the vector address in a memory cell.

2. Method according to Claim 1, in which
a cross-reference to an entry in a protected list of legal vector addresses is stored immediately before or after the vector address in the memory cell.

3. Method according to Claim 1 or 2, in which
the vector address is jumped to directly.

4. Method according to one of Claims 1 to 3, in which,
when a function call is being carried out, an automatic check is carried out to determine whether the data correlation is satisfied for the relevant vector address.

5. Method for protection of vector addresses for functions in computer programs, in which a permissible vector address is made identifiable by correlation of data which are not within the same individual instruction, and this correlation process is carried out with program data in non-reserved memory areas, in which
program instructions do not exceed a certain maximum number n of bytes, and a specific no-operation code (SNOP) is provided in order to avoid random correlations, and
the correlation process is carried out between code data items which are at least n bytes away from one another.

6. Method according to Claim 5, in which
the vector address is stored by insertion of a specific byte sequence which cannot occur within the regular code.

7. Method according to Claim 6, in which
a specific no-operation code (SNOP) is used as the specific byte sequence.

8. Method according to one of Claims 5 to 7, in which
the vector address is jumped to directly.

## Revendications

1. Procédé de protection d'adresses d'entrée de fonctions dans des programmes informatiques, dans lequel une adresse d'entrée autorisée peut être détectée par une corrélation de données qui ne se trouvent pas à l'intérieur de la même instruction individuelle et dans lequel une adresse d'une donnée corrélée est mémorisée dans une cellule de mémoire immédiatement avant ou après l'adresse d'entrée.

2. Procédé selon la revendication 1, dans lequel une référence à une entrée dans une liste protégée d'adresses d'entrée légales est mémorisée dans la cellule de mémoire immédiatement avant ou après l'adresse d'entrée.

3. Procédé selon la revendication 1 ou 2, dans lequel l'on saute directement à l'adresse d'entrée.

4. Procédé selon l'une des revendications 1 à 3, dans lequel on vérifie automatiquement lors de l'appel d'une fonction si la corrélation des données est satisfaite pour l'adresse d'entrée correspondante.

5. Procédé de protection d'adresses d'entrée de fonctions dans des programmes informatiques, dans lequel une adresse d'entrée autorisée peut être détectée par une corrélation de données qui ne se trouvent pas à l'intérieur de la même instruction individuelle et dans lequel cette corrélation avec des données de programme apparaît dans des zones de mémoire non réservées,
des instructions de programme ne dépassant pas un certain nombre n maximum d'octets et un code spécial de non-opération (SNOP) étant prévu pour empêcher des corrélations accidentelles et
la corrélation étant effectuée entre des données de code qui sont distants d'au moins n octets.

6. Procédé selon la revendication 5, dans lequel l'adresse d'entrée est protégée en insérant une séquence d'octets spéciale qui ne peut pas apparaître à l'intérieur du code régulier.

7. Procédé selon la revendication 6, dans lequel un code spécial de non-opération (SNOP) est utilisé comme séquence d'octets spéciale.

8. Procédé selon l'une des revendications 5 à 7, dans lequel on saute directement à l'adresse d'entrée.
